# EUROPEAN PATENT SPECIFICATION

(11) **EP 0 373 822 B1**
(45) Date of publication and mention of the grant of the patent: **08.03.1995**
(21) Application number: 89312698.7
(22) Date of filing: 06.12.1989
(51) Int. Cl.: H04N 9/31, G02F 1/1335

(54) **Projection display using liquid crystal device with reflective color filters**
Projektions-Anzeigevorrichtung unter Verwendung einer Flüssigkristallzelle mit reflektiven Farbfiltern
Dispositif d'affichage par projection utilisant une cellule à cristal liquide munie de filtres de couleurs réfléchissants

(30) Priority: 15.12.1988 US 285160
(43) Date of publication of application: 20.06.1990
(73) Proprietor: Hughes Aircraft Company, Los Angeles, California 90045-0066 (US)
(72) Inventor: Gunther, John E., Torrance - California 90503 (US)
(74) Representative: Colgan, Stephen James

(56) References cited:
- EP-A- 0 294 898
- US-A- 4 006 968
- US-A- 4 202 010

## Description

### BACKGROUND OF THE INVENTION

The invention is related to the field of liquid crystal displays, and more particularly to a projection display using a liquid crystal display with reflective color filters.

Transparent liquid crystal devices (LCDs) incorporating striped or dot-pattern color filters are well known in the art, and are used in commercial products such as small screen LCD television receivers. An exemplary paper describing such a device is "Color LCD for Character and TV Display Addressed by Self-Aligned a-Si:H TFT," by Yasuhiro Nasu et al., SID 86 Digest, pages 289-292. These LCDs use absorptive filters fabricated by depositing and patterning inorganic or organic pigments on a glass substrate. These devices have not been used in projection display systems, in part because the color filters bleach or decompose when exposed to bright light.

Projection display systems using reflective liquid crystal devices have been developed by Hughes Aircraft Company as described in Report NADC-77212-30, "Development of a Color Alphanumeric Liquid Crystal Display," December 1981, prepared for the Naval Air Development Center, by R.G. Hegg and J.E. Gunther. A projection system using transparent liquid crystal matrices is described in the paper entitled "LCD Full-Color Video Projector," by Shinji Morozumi et al., SID Digest, pages 375-378, 1986. Both of these projection systems use separate liquid crystal devices for the three primary colors and color selective beam-splitters. Such an apparatus is expensive and requires considerable space.

US-A-4006968 describes a liquid crystal dot sequential color display device. A color image is formed in a liquid crystal display panel for viewing in reflection. Each pixel is broken up into its three primary color components present in an adjacent manner. Arrangements used to form the basic color cells involved are: (a) deposition of band-pass filters in front of the display, and (b) deposition of band reflection mirrors behind the liquid crystal material. The band-pass filters are color selective interference filters. These devices are understood to have been used in a directly-viewed mode only, i.e., not in a projected mode.

It would therefore represent an advance in the art to provide a projection display system using liquid crystal devices which do not require a beamsplitter or separate devices for each of the primary colors, and which do not use absorptive color filters in the liquid crystal device.

The present invention provides a color liquid crystal display system, comprising:
means for projecting a beam of white light;
a single liquid crystal device positioned with respect to said projecting means to receive said projected light beam, said device comprising: first and second transparent substrates; liquid crystal material disposed between said first and second transparent substrates; first and second transparent electrode structures for applying an electric field to the liquid crystal material so as to define a desired image; a first linear light polarizing means for polarizing the said projected light beam incident on the liquid crystal device, and a second linear light polarizing means for transmitting from the liquid crystal device an image light beam consisting of light polarized in a predetermined polarization sense;
a display screen; and
projection optical elements positioned with respect to said liquid crystal device so as to project the image light beam onto the screen,
characterised in that the liquid crystal device further comprises a plurality of color filters positioned in correspondence with said first and second electrode structures, said colour filters comprising reflective interference filters for transmitting only a selected color or colors of light at a particular pixel position and for reflecting light of undesired colors,
whereby said electrode structure is adapted to be selectively energized so that light of a desired color or colors is transmitted through pixels of the liquid crystal device and light of undesired color or colors is reflected from corresponding pixel locations of said color filters and substantially no light energy is absorbed by said color filters.

These and other features and advantages of the present invention will become more apparent from the following detailed description of exemplary embodiments thereof, as illustrated in the accompanying drawings, in which:

FIG. 1 is a cross-sectional view of a liquid crystal device employing reflective color filters in accordance with the invention.

FIGS. 2A-2D represent four alternative embodiments of the patterning of the reflective color filters employed in a liquid crystal device in accordance with the invention.

FIG. 3 is a simplified schematic diagram of a projection system employing a liquid crystal device with reflective color filters in accordance with the invention.

FIGS. 4A-4C are simplified optical structure and ray diagrams illustrating the absorption of light energy by the conventional LCD device with absorptive color filters (FIG. 4A) and projection systems employing LCD devices with reflective color filters.

FIG. 5 is a cross-sectional view of an alternate embodiment of a liquid crystal device employing the invention, with a polarizing prism for polarizing the incident projection light.

FIG. 6 is a simplified illustration of a particular pixel location for the device of FIGS. 1 or 5.

FIGS. 7A-7D illustrate one fabrication technique for fabricating the patterned reflective color filters employed in accordance with the invention.

### DETAILED DESCRIPTION OF THE PREFERRED EMBODIMENTS

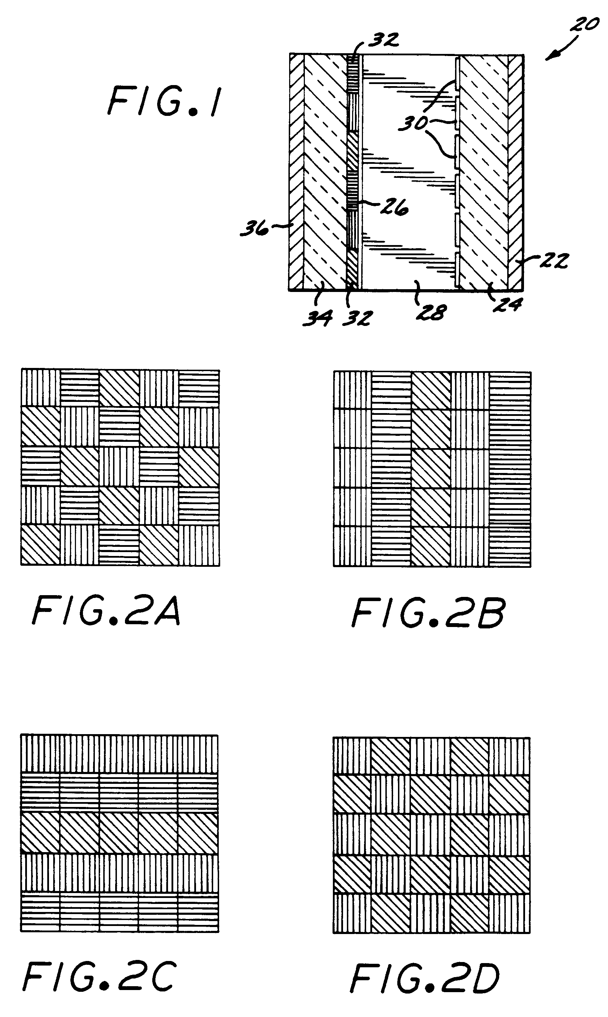

FIG. 1 is a cross-sectional diagram of a liquid crystal device structure 20 containing color filters. The structure includes linear polarizers 22 and 36 sandwiching the interior elements of the structure. Glass substrates 24 and 34 in turn sandwich the pixel or column electrodes 30, the liquid crystal material 28, the common or row electrodes 26, and the color filters 32.

The glass substrate 34 is also coated with color filter materials which are patterned to correspond to the matrix of display picture elements or pixels. Possible patterns for the color filters are illustrated in FIGS. 2A-2D. These patterns include the three color diagonal arrangement of FIG. 2A, the three color vertical strip arrangement of FIG. 2B, and three color horizontal strip arrangement of FIG. 2C, and the two color checkerboard pattern shown in FIG. 2D. Other patterns not shown specifically in FIGS. 2A-2D could also be used. Further, either two (typically red and green) or three (red, green and blue) color filter types may be employed. The number of color filter types and the filter dot or pixel arrangement is not critical to this invention.

By selectively energizing the liquid crystal material adjacent to the appropriate color filter dots, symbolic and video information can be shown in color.

The electrodes 30 are coated on one side of the glass substrate 24. The electrodes 26 are coated on the color filters 32. These electrodes are patterned to define a matrix of picture elements, as described, for example, in U.S. Patent 4,006,968. Many techniques for defining and electrically driving the matrix of picture elements in a color liquid crystal device are known in the art. The particular technique employed is a matter of design choice.

In conventional liquid crystal structures, the color filters take the form of patterned organic or inorganic pigments which then absorb the incident light except for the desired narrow color band which is transmitted. This type of color filter arrangement is used in the small LCD televisions on the market today.

In accordance with the invention, the color filters 32 of the liquid crystal structure 20 comprise reflective multilayer dielectric dichroic mirrors. Such mirrors are composed of alternating layers of two materials such that the reflections from the interfaces between the layers interfere upon reflection. Such color-selective mirrors are well known in the art, e.g., The Handbook of Optics, Walter G. Driscoll and William Vaughan eds., Mc Graw-Hill (1978), pages 8-58 to 8-63, Chapter 8. Striped reflective dielectric mirrors have been fabricated and incorporated into a reflective liquid crystal device by the assignee of this application, as described in the Final Report NADC-77212-30, "Development of a Color Alphanumeric Liquid Crystal Display," prepared for the Naval Air Development Center, December 1979, by J.E. Gunther. Such structure is understood to have been employed only for a direct view system.

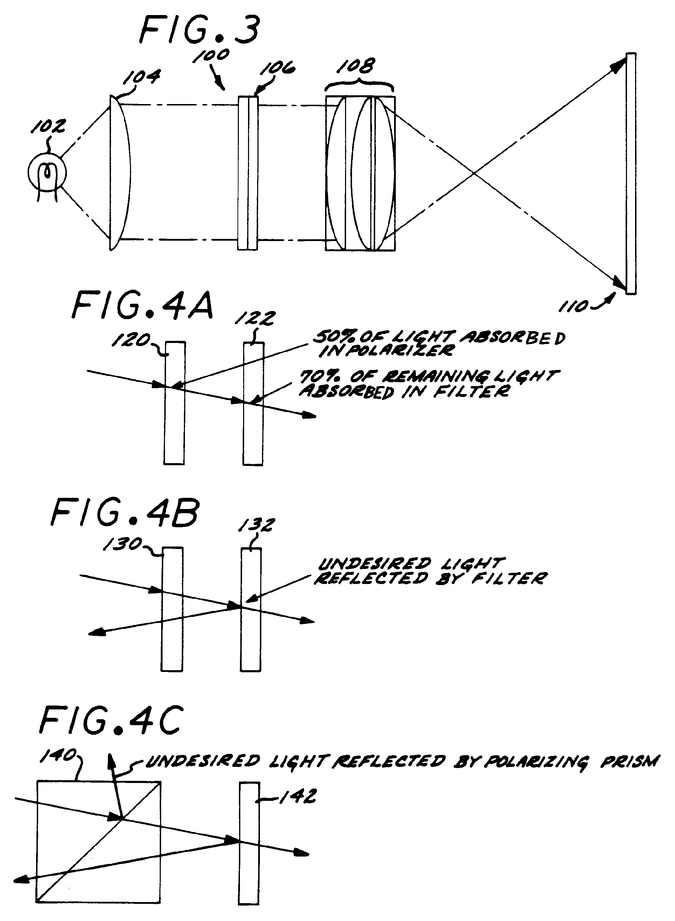

FIG. 3 shows a simple projection system 100 employing a transmissive liquid crystal device with reflective color filters in accordance with the invention. The system comprises a light source 102, a condensing lens 104 which serves in this exemplary embodiment to collect the light generated by the light source 102 to direct white projection light onto the liquid crystal device 106. In other applications, a reflecting optical element may be alternatively employed instead of the condensing lens to collect the light generated by the light source 102. The device 106 employs the reflective color filters as described above with respect to FIG. 1. The color image light transmitted through the liquid crystal device 106 impinges on the projection lens assembly 108 for projection onto screen 110.

The advantages of the color projection display system 100 can be more fully appreciated with respect to FIGS. 4A and 4B. FIG. 4A illustrates the optical light path through a conventional transmissive liquid crystal device employing absorptive color filters. The incident light impinges on the input polarizer 120, where 50% of the light is absorbed. The remaining light of the desired polarization passes through the polarizer 120 and impinges on the color filter 122 comprising the liquid crystal device. Typically, 70% of the polarized light is absorbed in the filter 122 with only the remaining 30% of the polarized light passing through the liquid crystal layer. The voltages applied to the liquid crystal layer determine the spatial pattern of the light that transits the device to the user. Therefore, much of the light energy is absorbed in the color filter, which for high intensity projection light applications would lead to fading or bleaching of the color filters, resulting in a loss of display contrast or color purity. Thus, the conventional liquid crystal device using absorptive color filters is not suitable for projection display applications.

FIG. 4B illustrates the optical light path through a liquid crystal device employing reflective color filters in accordance with the invention. The incident light impinges upon the polarizer 130, where 50% of the incident light is absorbed as in FIG. 4A. The remaining polarized light impinges on the color filters 132, where the undesired light is reflected, and the desired light colors are transmitted through the filters. Since no light is absorbed by the filters, the liquid crystal device may handle higher intensity input light without degradation. As a result, such a device may be advantageously employed in projection display applications.

The operation of a second embodiment of the invention is shown in FIG. 4C. In this embodiment, the input polarizer of the liquid crystal device is omitted, and a polarizing prism is disposed in front of the device. The light component of the incident light which is polarized in the desired orientation is passed by the prism, while the oppositely polarized component is reflected by the prism. The passed light is treated by the reflective color filter 142 in the same manner as is described with respect to filter 132 in FIG. 4B. Thus, the alternative embodiment results in less light power dissipation in the liquid crystal device as compared to the first embodiment.

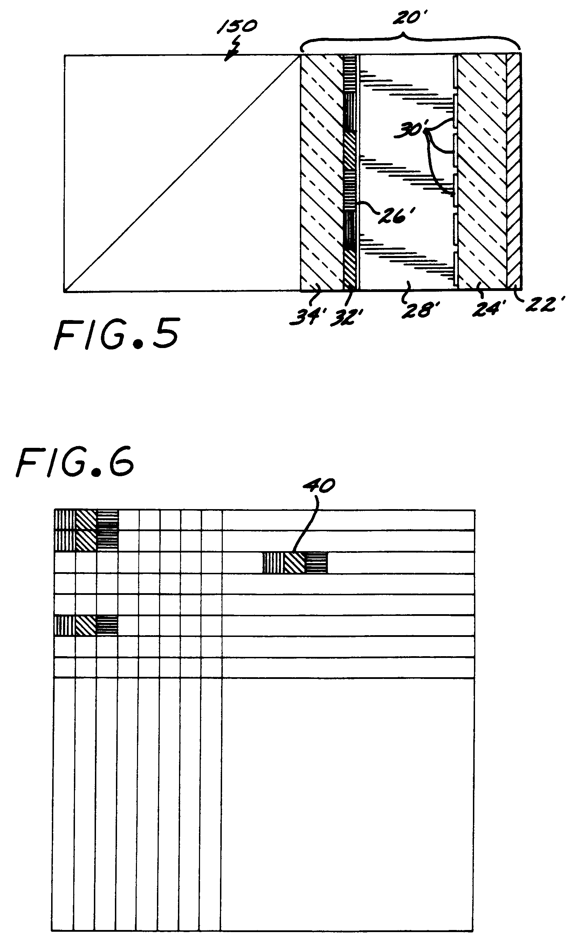

The second embodiment is shown in further detail in FIG. 5. Here, a polarizing prism 150 is assembled with a liquid crystal structure 20′ which in this embodiment is identical to structure 20 of FIG. 1, except that the linear polarizer 36 of structure 20 has been replaced with the prism 150. The prism 150 can be assembled to the glass substrate 34′ by index-matching glue. Thus, the structure 20′ comprises reflective color filters 32′, common or row electrodes 26′, the liquid crystal material 28′, the pixel or column electrodes 30′, the glass substrate 24′ and linear polarizer 22′.

The operation of the projection display system of FIG. 3 may be understood with reference to FIG. 6, which shows an exemplary pixel element 40 of the patterned color filters 32, comprising three adjacent red (R), green (G), and blue (B) filters, and with reference to FIG. 1 which shows the liquid crystal device. The color filters are shown much larger than the actual size. The dimension of the three respective color filters at each pixel location are in reality smaller than the resolving power of the human eye. The projection light beam is of white light, and is incident on the liquid crystal structure 20, initially impinging on the linear polarizer 36. The incident light is polarized by element 36, so that substantially only light energy of the desired polarization orientation is passed through the polarizer 36, and is incident on the color filters 32, the transparent electrode structure 26, and the liquid crystal material 28. The color filters 32 selectively reflect incident light so that only the desired light color will be transmitted through a particular filter. The red filter transmits the red light while substantially reflecting light of other visible wavelengths. Similarly the blue filter transmits the blue light while reflecting other wavelengths, and the green filter transmits the green light while reflecting other wavelengths.

As will be appreciated by those skilled in the art, depending on the particular design, the combination of the liquid crystal material and linear polarizer is either substantially transparent or opaque to the incident polarized light when no potential is applied to the material. Assume that the liquid crystal material 28 and polarizer combination is of the type which is opaque when no potential is applied, and that the pixel location 40 is to appear red. Then only the electrode adjacent the red color filter is energized, so that substantially no light is transmitted by the liquid crystal material adjacent the blue and green filters, i.e., so that no blue or green light is passed through the liquid crystal material 28 for the pixel location 40. Only red light is permitted to transmit through the pixel location so that the viewer perceives a red spot of light at this pixel location. This operation is repeated for the hundreds or thousands of other pixel locations of the liquid crystal device, to form a full color image defined by the electrode addressing circuitry. The image may be varied dynamically and periodically refreshed by the electrode addressing circuitry, as is well known in the art.

The color filters 32 could be placed "downstream" of the liquid crystal light, so that the incident projection light first passes through the liquid crystal material, instead of the arrangement shown in FIG. 1 without significant impact on this invention.

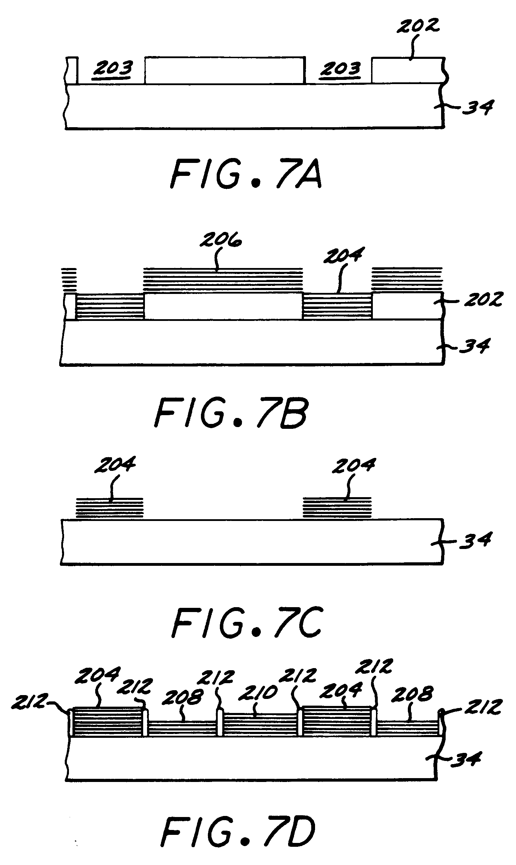

FIGS. 7A-7D illustrate one technique by which the patterned reflective color filters 20 may be fabricated on the substrate 34. This is a "lift-off" photolithographic process as is commonly used in LSI semiconductor device fabrication. Other additive or subtractive processes can also be used to fabricate the patterned filter.

In FIG. 7A, a patterned photoresist layer 202 has been formed on the substrate 34, with opening pattern 203 which corresponds to the position of particular color filter locations, e.g., the red filters. Next, the thin film layers 204 comprising the red filters are deposited on the structure shown in FIG. 7A, with the resulting structure shown in FIG. 7B. The layers are formed not only on the substrate through the openings 203, but also on the photoresist 202. In the next step, the photoresist layer 202 is removed, with the layers 204 deposited on top of the photoresist 202 being lifted-off as the photoresist is removed by a dissolving agent. The resulting structure, shown in FIG. 7C, has only the properly located red filters 204 deposited on the substrate 34.

The process is then repeated to form the green and blue filters, e.g., filters 208 and 210. Lastly, a light absorbing material 212 is commonly deposited in the interstices of the filters to enhance the contrast. The resulting patterned filter is shown in FIG. 7D.

The invention has utility for such applications as color VIDs or head-up displays for automotive applications.

It is understood that the above-described embodiments are merely illustrative of the possible specific embodiments which may incorporate principles of the present invention. Other arrangements may readily be devised in accordance with these principles by those skilled in the art without departing from the scope of the invention.

## Claims

1. A color liquid crystal display system (100), comprising:
means (102, 104) for projecting a beam of white light;
a single liquid crystal device (106) positioned with respect to said projecting means to receive said projected light beam, said device comprising: first and second transparent substrates (34, 24); liquid crystal material (28) disposed between said first and second transparent substrates (34, 24); first and second transparent electrode structures (26, 30) for applying an electric field to the liquid crystal material (28) so as to define a desired image; a first linear light polarizing means (36) for polarizing the said projected light beam incident on the liquid crystal device (106), and a second linear light polarizing means (22) for transmitting from the liquid crystal device (106) an image light beam consisting of light polarized in a predetermined polarization sense;
a display screen (110); and
projection optical elements (108) positioned with respect to said liquid crystal device (106) so as to project the image light beam transmitted through said liquid crystal device onto the screen (110),
characterised in that the liquid crystal device (106) further comprises a plurality of color filters (32) positioned in correspondence with said first and second electrode structures (26, 30), said colour filters (32) comprising reflective interference filters for transmitting only a selected color or colors of light at a particular pixel position and for reflecting light of undesired colors,
whereby said electrode structure is adapted to be selectively energized so that light of a desired color or colors is transmitted through pixels of the liquid crystal device (106) and light of undesired color or colors is reflected from corresponding pixel locations of said color filters (32) and substantially no light energy is absorbed by said color filters (32).

2. The system of claim 1, wherein said means for projecting a beam of white light comprises a white light source (102) and a means (104) for collecting the light generated by the light source (102) and directing the collected light onto the liquid crystal device (106).

3. The system of claim 1 or 2, wherein:
the first and second transparent substrates (34, 24) are made of glass;
the color filters (32) are deposited on a first surface of the first transparent substrate (34);
the first transparent electrode structure (26) is formed adjacent to the color filters (32);
the second transparent electrode structure (30) is formed on a first surface of the second transparent substrate (24); and
the first and second linear light polarizers (36, 22) are respectively disposed adjacent the respective second surfaces of said first and second transparent substrates (34,24).

4. The system of claim 1, 2 or 3 wherein said color filters (32) are disposed so as to form a two-color checker-board-like pattern (Fig. 2D).

5. The system of claim 1, 2 or 3 wherein said color filters (32) are arranged to form a three-color pattern.

6. The system of claim 5 wherein said three-color pattern defines a three-color diagonal stripe arrangement of alternating color pixels arranged along diagonals (Fig. 2A).

7. The system of claim 5 wherein said three-color pattern defines a three-color vertical stripe arrangement of alternating vertical color stripes (Fig. 2B).

8. The system of claim 5 wherein said three-color pattern defines a three-color horizontal stripe arrangement of alternating horizontal color stripes (Fig. 2C).

9. The system of claim 3, wherein the first linear light polarizer is a polarizing prism (150).

10. The system of claim 1 wherein said color filters (32) are disposed with respect to said liquid crystal material (28) so that the projection light is incident on the color filters (32) prior to impinging on the liquid crystal material (28).

## Patentansprüche

1. Farb-Flüssigkristall-Anzeigesystem (100), mit:
einer Einrichtung (102, 104) zum Projizieren eines weißen Lichtstrahls;
einer einzigen Flüssigkristallvorrichtung (106), die bezüglich der Projektionseinrichtung derart angeordnet ist, daß sie den projizierten Lichtstrahl empfängt, wobei diese Vorrichtung umfaßt: erste und zweite transparente Substrate (34, 24); ein Flüssigkristallmaterial (28), das zwischen den ersten und zweiten transparenten Substraten (34, 24) angeordnet ist; erste und zweite transparente Elektrodenstrukturen (26, 30), die ein elektrisches Feld an das Flüssigkristallmaterial (28) anlegen, um ein erwünschtes Bild zu definieren; eine erste Linearlichtpolarisationseinrichtung (36), die den auf die Flüssigkristallvorrichtung (106) einfallenden projizierten Lichtstrahl polarisiert, und eine zweite Linearlichtpolarisationseinrichtung (22), die einen Bildlichtstrahl, der aus in einer vorbestimmten Polarisationsrichtung polarisiertem Licht besteht, aus der Flüssigkristall-Vorrichtung (106) weiterleitet;
einem Anzeigeschirm (110); und
optischen Projektionselementen (108), die bezüglich der Flüssigkristallvorrichtung (106) derart angeordnet sind, daß der durch die Flüssigkristallvorrichtung weitergeleitete Bildlichtstrahl auf den Schirm (110) projiziert wird,
*dadurch gekennzeichnet, daß* die Flüssigkristallvorrichtung (106) desweiteren eine Vielzahl von Farbfiltern (32) umfaßt, die entsprechend den ersten und zweiten Elektrodenstrukturen (26, 30) angeordnet sind, wobei diese Farbfilter (32) reflektierende Interferenzfilter umfassen, die nur eine ausgewählte Farbe oder ausgewählte Farben des Lichts an einer einzelnen Bildpunktposition durchlassen und Licht unerwünschter Farben reflektieren,
wodurch die Elektrodenstruktur in der Lage ist, selektiv so erregt zu werden, daß Licht einer erwünschten Farbe oder erwünschter Farben durch Bildpunkte der Flüssigkristallvorrichtung (106) weitergeleitet wird und Licht unerwünschter Farbe oder Farben von entsprechenden Bildpunktorten dieser Farbfilter (32) reflektiert wird und im wesentlichen keine Lichtenergie von den Farbfiltern (32) absorbiert wird.

2. System nach Anspruch 1, bei dem die Einrichtung zum Projizieren eines weißen Lichtstrahls eine Weißlichtquelle (102) und eine Einrichtung (104) umfaßt, die das durch die Lichtquelle (102) erzeugte Licht sammelt und das gesammelte Licht auf die Flüssigkristallvorrichtung (106) richtet.

3. System nach Anspruch 1 oder 2, bei dem:
die ersten und zweiten transparenten Substrate (34, 24) aus Glas hergestellt sind;
die Farbfilter (32) auf einer ersten Oberfläche des ersten transparenten Substrats (34) abgesetzt sind;
die erste transparente Elektrodenstruktur (30) naheliegend den Farbfiltern (32) ausgebildet ist;
die zweite transparente Elektrodenstruktur (30) auf einer ersten Oberfläche des zweiten transparenten Substrats (24) ausgebildet ist; und
die ersten und zweiten Linearlichtpolarisatoren (36, 22) den jeweiligen zweiten Oberflächen des ersten bzw. zweiten transparenten Substrats (34, 24) naheliegend angeordnet sind.

4. System nach Anspruch 1, 2 oder 3, bei dem die Farbfilter (32) so angeordnet sind, daß sie ein zweifarbiges schachbrettartiges Muster bilden (Fig. 2D).

5. System nach Anspruch 1, 2 oder 3, bei dem die Farbfilter so angeordnet sind, daß sie ein dreifarbiges Muster bilden.

6. System nach Anspruch 5, bei dem das dreifarbige Muster eine dreifarbige Diagonalstreifen-Anordnung wechselnder Farbbildpunkte definiert, die entlang Diagonalen angeordnet sind (Fig. 2A).

7. System nach Anspruch 5, bei dem das dreifarbige Muster eine dreifarbige Vertikalstreifen-Anordnung wechselnder vertikaler Farbstreifen definiert (Fig. 2B).

8. System nach Anspruch 5, bei dem das dreifarbige Muster einen dreifarbige Horizontalstreifen-Anordnung wechselnder horizontaler Farbstreifen definiert (Fig. 2C).

9. System nach Anspruch 3, bei dem der erste Linearlichtpolarisator ein polarisierendes Prisma (150) ist.

10. System nach Anspruch 1, bei dem die Farbfilter (32) bezüglich des Flüssigkristallmaterials (28) so angeordnet sind, daß das projizierte Licht vor dem Aufprallen auf das Flüssigkristallmaterial (28) auf die Farbfilter (32) einfällt.

## Revendications

1. Système (100) d'affichage en couleur à cristaux liquides, comprenant:
des moyens (102, 104) pour projeter un faisceau de lumière blanche;
un dispositif unique (106) à cristaux liquides disposé par rapport auxdits moyens de projection pour recevoir ledit faisceau de lumière projetée, ledit dispositif comprenant: des premier et second substrats transparents (34, 24); un matériau à cristaux liquides (28) disposé entre lesdits premier et second substrats transparents (34, 24); des première et seconde structures (26, 30) d'électrodes transparentes pour appliquer un champ électrique au matériau (28) à cristaux liquides de manière à définir une image souhaitée; un premier moyen (36) de polarisation linéaire de la lumière pour polariser ledit faisceau de lumière projeté incident sur le dispositif (106) à cristaux liquides, et un second moyen (22) de polarisation linéaire de la lumière pour transmettre à partir du dispositif (106) à cristaux liquides un faisceau de lumière d'image consistant en une lumière polarisée dans un sens de polarisation prédéterminé;
un écran d'affichage (110); et
des éléments (108) optiques de projection disposés par rapport audit dispositif (106) à cristaux liquides de manière à projeter sur l'écran (110) le faisceau de lumière d'image transmis à travers ledit dispositif à cristaux liquides,
caractérisé en ce que le dispositif (106) à cristaux liquides comprend en outre une pluralité de filtres de couleur (32) disposés en correspondance avec lesdites première et seconde structures d'électrodes (26, 30), lesdits filtres de couleur (32) comprenant des filtres d'interférence de réflexion pour transmettre une couleur sélectionnée uniquement ou des couleurs de la lumière dans une position de pixel particulière et pour réfléchir la lumière des couleurs non souhaitées,
grâce à quoi ladite structure d'électrode est apte à être sélectivement excitée de telle sorte que la lumière d'une ou des couleurs souhaitée(s) est transmise par les pixels du dispositif (106) à cristaux liquides et la lumière de la couleur ou des couleurs non souhaitée(s) est réfléchie par des emplacements de pixels correspondants desdits filtres de couleur (32) et que sensiblement aucune énergie lumineuse n'est absorbée par lesdits filtres de couleur (32).

2. Système selon la revendication 1, dans lequel lesdits moyens pour projeter un faisceau de lumière blanche comprennent une source (102) de lumière blanche et un moyen (104) pour collecter la lumière générée par la source (102) de lumière et diriger la lumière collectée sur le dispositif (106) à cristaux liquides.

3. Système selon la revendication 1 ou 2, dans lequel:
les premier et second substrats transparents (34, 24) sont réalisés en verre;
les filtres de couleur (32) sont déposés sur une première surface du premier substrat transparent (34);
la première structure d'électrode transparente (26) est formée dans une position adjacente aux filtres de couleur (32);
la seconde structure d'électrode transparente (30) est formée sur une première surface du second substrat transparent (24); et
les premier et second polariseurs (36, 22) linéaires de lumière sont respectivement disposés dans une position adjacente aux secondes surfaces respectives desdits premier et second substrats transparents (34, 24).

4. Système selon la revendication 1, 2 ou 3 dans lequel lesdits filtres de couleur (32) sont disposés de manière à former une configuration en forme de damier en deux couleurs (figure 2D).

5. Système selon la revendication 1, 2 ou 3 dans lequel lesdits filtres de couleur (32) sont disposés pour former une configuration en trois couleurs.

6. Système selon la revendication 5, dans lequel ladite configuration en trois couleurs définit un agencement en bandes disposées en diagonale en trois couleurs, de pixels de couleurs alternées disposés selon les diagonales (figure 2A).

7. Système selon la revendication 5 dans lequel ladite configuration en trois couleurs définit un agencement en bandes verticales en trois couleurs de bandes verticales en couleurs alternées (figure 2B).

8. Système selon la revendication 5 dans lequel ladite configuration en trois couleurs définit un agencement en bandes horizontales en trois couleurs de bandes horizontales en couleurs alternées (figure 2C).

9. Système selon la revendication 3, dans lequel le premier polariseur linéaire de lumière est un prisme de polarisation (150).

10. Système selon la revendication 1, dans lequel lesdits filtres de couleur (32) sont disposés par rapport audit matériau (28) à cristaux liquides de telle sorte que la lumière de projection est incidente sur les filtres de couleur (32) avant de frapper le matériau (28) à cristaux liquides.
